# EUROPÄISCHE PATENTSCHRIFT

(11) **EP 4 095 015 B1**
(45) Veröffentlichungstag und Bekanntmachung des Hinweises auf die Patenterteilung: **16.07.2025**
(21) Anmeldenummer: 22166047.5
(22) Anmeldetag: 31.03.2022
(51) Int. Cl.: B62D 3/12, F16H 55/28

(54) **DRUCKSTÜCKANORDNUNG FÜR EINE KRAFTFAHRZEUGLENKUNG**
PRESSURE PIECE ASSEMBLY FOR MOTOR VEHICLE STEERING
AGENCEMENT DE PIÉCE DE PRESSION POUR UNE DIRECTION DE VÉHICULE AUTOMOBILE

(30) Priorität: 27.05.2021 DE 102021205414
(43) Veröffentlichungstag der Anmeldung: 30.11.2022
(73) Patentinhaber: VOLKSWAGEN AG, 38440 Wolfsburg (DE)
(72) Erfinder: Buuck, Sebastian, 38112 Braunschweig (DE); Schneider, Thomas, 38114 Braunschweig (DE)

(56) Entgegenhaltungen:
- DE-A1- 102019 120 586
- KR-A- 20190 105 416
- US-A- 5 802 919
- US-A1- 2008 034 903

## Beschreibung

Die Erfindung bezieht sich auf eine Druckstückanordnung für eine Kraftfahrzeuglenkung mit den Merkmalen des Oberbegriffs von Patentanspruch 1.

Eine Druckstückanordnung für eine Kraftfahrzeuglenkung mit den Merkmalen des Oberbegriffs von Patentanspruch 1 ist aus US 2008/034903 A1 bekannt. Deren radial innenliegender erster gemeinsamer Anschlagsbereich und radial außenliegender zweiter gemeinsamer Anschlagsbereich werden durch jeweils zueinander parallele Anschlagflächen gebildet. Dabei ist der erste Anschlagsbereich axial weich ausgebildet, so dass nach Überschreiten eines bestimmten Kraftniveaus auch der zweite Anschlagsbericht zum Tragen kommt.

Druckstückanordnungen umfassend ein Druckstück zur Anlage gegen eine Lenkstange, das in einer Buchse in einer Axialrichtung gleitbewegbar anordenbar ist, ein Einstellelement, das in die Buchse einschraubbar ist und den axialen Verschiebeweg des Druckstücks in einer Richtung begrenzt, wobei das Druckstücke eine zum Einstellelement weisende erste Stirnwand und das Einstellelement eine zum Druckstück weisende zweite Stirnwand aufweist, und eine Federeinrichtung, die zwischen dem Druckstück und dem Einstellelement deren Stirnwände auseinanderdrückend angeordnet ist, sind gleichermaßen aus DE 10 2012 019 934 A1 und DE 10 2013 201 916 A1 bekannt.

Druckstückanordnungen dienen dazu, an einer Kraftfahrzeuglenkung eine Lenkstange, insbesondere eine Zahnstange in engen Kontakt mit einem mit dieser in Eingriff stehenden Getriebeglied wie beispielsweise einem Lenkungsritzel zu drängen, um eine Spielfreiheit des Eingriffs zu gewährleisten.

Allerdings können an den bekannten Druckstückanordnungen insbesondere bei Schlechtwegfahrten Klappergeräusche auftreten.

Der alleinige Einsatz eines O-Rings zwischen den Stirnwänden des Druckstücks und des Einstellelements, wie in DE 10 2013 201 916 A1 gezeigt, hat sich hierbei nicht als ausreichend erwiesen.

Eine Erhöhung der Vorspannkraft der Federeinrichtung könnte akustische Auffälligkeiten verringern, besitzt jedoch den Nachteil der Reduzierung der Lebensdauer der Feder und führt bei identischer Konstruktion zu einer in der Regel unerwünschten Erhöhung der Reibung in der Kraftfahrzeuglenkung.

Der Erfindung liegt daher die Aufgabe zugrunde, Alternativen zur Verringerung akustischer Auffälligkeiten im Bereich einer Druckstückanordnung einer Kraftfahrzeuglenkung aufzuzeigen.

Diese Aufgabe wird durch eine Druckstückanordnung für eine Kraftfahrzeuglenkung gemäß Patentanspruch 1 gelöst.

Durch die erfindungsgemäße Aufteilung des Anschlagsbereichs zwischen dem Druckstück und dem Einstellelement können akustische Auffälligkeiten verringert werden, ohne die Abstützung des Druckstücks gegen das Einstellelement zu gefährden.

Der zweite gemeinsame Anschlagsbereich dient vor allem der Abstützung bei sehr hohen Kräften, ist im Normalbetrieb jedoch zumeist nicht wirksam. Bei Schlechtwegfahrten kann es jedoch aufgrund eines funktionsbedingt nötigen geringfügigen radialen Spiels zwischen dem Druckstück und der dieses führenden Buchse zu Kippbelastungen am Druckstück kommen. Durch die Absetzung des zweiten gemeinsamen Anschlagsbereichs gegenüber dem ersten gemeinsamen Anschlagsbereich wird für diesen Fall ein gewisser Freiraum geschaffen, so dass bei einem solchen Verkippen des Druckstücks in seiner Führung die am weitesten vorragenden Randbereiche der Stirnwand des Druckstücks gleichwohl nicht gegen das Einstellelement anschlagen, womit eine entsprechende Geräuschentstehung unterbunden wird.

In der Stirnwand des Einstellelements ist eine Ringnut ausgebildet, welche an der Stirnwand des Einstellelements den ersten gemeinsamen Anschlagsbereich und den zweiten gemeinsamen Anschlagsbereich voneinander trennt und in einen Innenring und einen Außenring unterteilt. In der Ringnut ist ein Elastomerelement angeordnet, welches die Ringnut in Richtung des Druckstücks überragt und in einem elastisch komprimierten Zustand vollständig in der Ringnut aufnehmbar ist. Dieses dämpft ein Anschlagen insbesondere dann, wenn das Druckstück nicht oder allenfalls schwach verkippt wird.

Der Außenring bildet eine konische Ringfläche, wodurch das Einstellelement weniger stark geschwächt wird. Alternativ oder ergänzend ist wie am Einstellelement der radial äußere Anschlagsbereich, d.h. den zweiten Abschnitt der Stirnwand des Druckstücks als konische Ringfläche ausgebildet.

Der vorstehend erwähnte Freiraum kann auf Seiten des Einstellelements, auf Seiten des Druckstücks oder an beiden gemeinsam bereitgestellt werden.

Besondere Ausführungsarten der Erfindung sind Gegenstand weiterer Patentansprüche.

In einer besonderen Ausführungsart der Erfindung ist der Außenring am Einstellelement gegenüber dem Innenring am Einstellelement zurückgesetzt. Der Innenring springt somit in Richtung des Druckstücks vor. Eine solche Gestaltung lässt sich mit geringem Aufwand am Einstellelement vorsehen, insbesondere dann, wenn dessen Stirnwand zur Einbringung der Ringnut ohnehin genau bearbeitet werden muss.

In einer Ausführungsvariante sind der Außenring und der Innenring ebene und zueinander parallele Ringflächen, welche sich leicht herstellen lassen.

Die korrespondierende Stirnwand des Druckstücks kann über die beiden gemeinsamen Anschlagsbereiche eine ebene Fläche sein, wodurch der Bearbeitungsaufwand am Druckstück gering bleibt.

Gemäß einer weiteren besonderen Ausführungsart der Erfindung kann ein dem Außenring des Einstellelements gegenüberliegender zweiter Abschnitt der Stirnwand des Druckstücks gegenüber einem dem Innenring des Einstellelements gegenüberliegenden ersten Abschnitt der Stirnwand des Druckstücks zurückgesetzt sein, um den oben erläuterten Freiraum zu schaffen.

In einer Ausführungsvariante können auch hier der erste und zweite Abschnitt durch zueinander parallele ebene Ringflächen gebildet werden.

Vorzugsweise beträgt die axiale Zurücksetzung maximal 0,1 bis 0,3 mm. Es hat sich gezeigt, dass dies zur Verminderung von durch Kippbewegungen des Druckstücks verursachte akustische Auffälligkeiten in der Regel ausreichend ist. Andererseits kommt bei hohen Axiallasten auch der zweite gemeinsame Anschlagsbereich zum Tragen.

Die vorstehend erläuterte Druckstückanordnung kommt bei einer Kraftfahrzeuglenkung zum Einsatz, welche ein Lenkungsgehäuse, eine Lenkstange und die besagte Druckstückanordnung umfasst, wobei die Buchse am Lenkungsgehäuse angebracht oder ausgebildet ist, das Druckstück unter Anlage gegen die Lenkstange in die Buchse eingesetzt ist, das Einstellelement am Lenkungsgehäuse festgelegt ist und die Federeinrichtung, welche sich gegen das Einstellelement abstützt, das Druckstück in Anlage gegen die Lenkstange drängt. Diese Kraftfahrzeuglenkung zeichnet sich durch verbesserte akustische Eigenschaften aus.

Nachfolgend wird die Erfindung anhand von in der Zeichnung dargestellten Ausführungsbeispielen näher erläutert. Die Zeichnung zeigt in:
- Fig. 1: eine schematische Ansicht einer Kraftfahrzeuglenkung nach einem Ausführungsbeispiel der Erfindung,
- Fig. 2: eine Schnittansicht einer Druckstückanordnung nach einem Ausführungsbeispiel der Erfindung,
- Fig. 3: eine Detailansicht der Druckstückanordnung aus Fig. 3, und in
- Fig. 4a-e: verschiedene Ausführungsvarianten für die Gestaltung der gemeinsamen Anschlagsbereiche zwischen dem Druckstück und dem Einstellelement, wobei die Varianten 4a und 4c nicht Gegenstand der Erfindung sind.

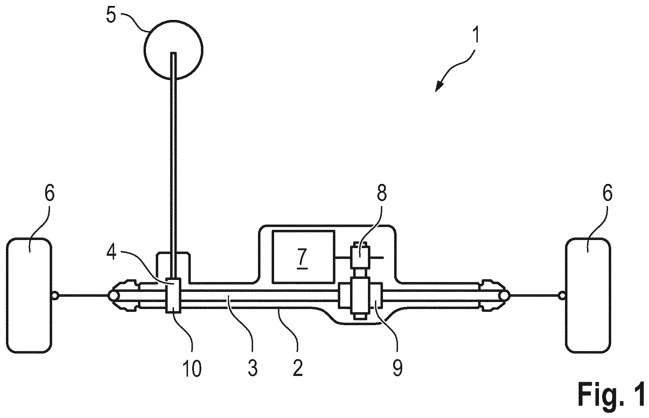

Das Ausführungsbeispiel in Fig. 1 zeigt eine Kraftfahrzeuglenkung 1 am Beispiel einer elektromechanischen Lenkung 1 für ein Personenkraftfahrzeug.

Die Kraftfahrzeuglenkung 1 weist ein Lenkungsgehäuse 2 auf, durch das sich eine Lenkstange 3 erstreckt. An der Lenkstange 3 greift ein Getriebeglied 4, beispielsweise ein Lenkungsritzel, an, um einen vom Fahrer an einer Lenkungshandhabe 5 aufgebrachten Lenkbefehl an die Fahrzeugräder 6 zu übertragen.

Weiterhin kann die Kraftfahrzeuglenkung 1 eine elektrische Antriebseinheit zur Erzeugung eines Lenkmoments aufweisen, welche zumindest einen Elektromotor 7 und gegebenenfalls weiterhin ein Getriebe umfasst. Der Elektromotor 7 kann, wie dargestellt, achsparallel zur Lenkstange 3 angeordnet sein. Es ist jedoch auch möglich, den Elektromotor 7 koaxial zur Lenkstange 3 oder an anderer Stelle anzuordnen.

Bei dem dargestellten Ausführungsbeispiel wird das Antriebsmoment des Elektromotors 7 über eine Getriebestufe 8 und einen im Lenkgetriebegehäuse 2 abgestützten Kugelgewindetrieb 9 als Axialkraft an der Lenkstange 3 zur Wirkung gebracht. Die Getriebestufe 8 ist hier beispielhaft als Riementrieb ausgebildet, wobei eine erste Riemenscheibe an einer Abtriebswelle des Elektromotors 7 und eine zweite Riemenscheibe an einer Kugelgewindemutter des Kugelgewindetriebs 9 angeordnet ist. Jedoch sind auch andere Getriebe wie beispielsweise Zahnradgetriebe oder dergleichen möglich.

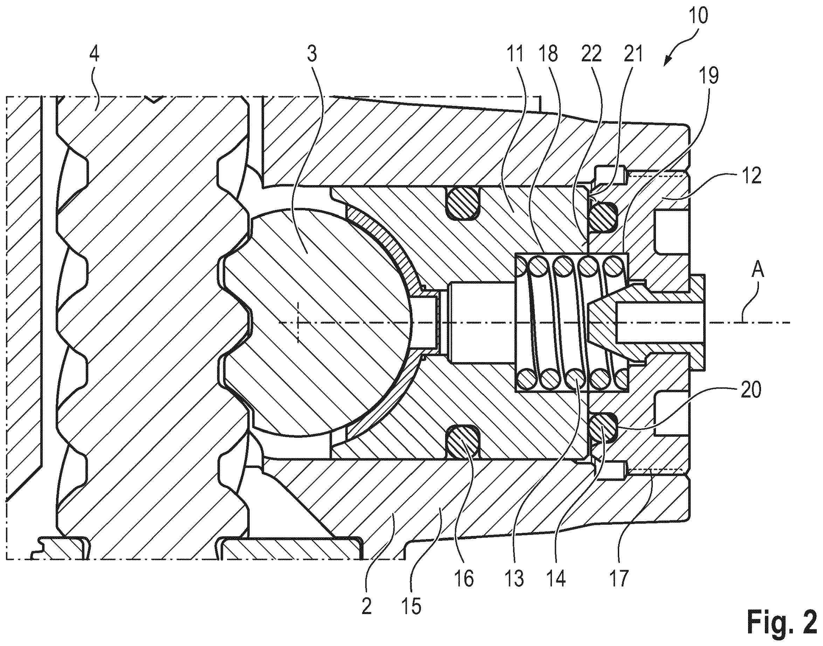

An der Kraftfahrzeuglenkung 1 ist weiterhin eine Druckstückanordnung 10 vorgesehen, welche dazu dient, für einen möglichst spielfreien Eingriff zwischen der Lenkstange 3 und dem Getriebeglied 4 zu sorgen. Diese Druckstückanordnung 10 wird nachfolgend anhand der Fig. 2 bis 4 näher erläutert.

Die Druckstückanordnung 10 umfasst ein Druckstück 11, ein Einstellelement 12, eine Federeinrichtung 13 sowie ein Elastomerelement 14.

Das Druckstück 11 die dazu, die Lenkstange 3 gegen das Getriebeglied 4 zu drücken. Dazu liegt im eingebauten Zustand das Druckstück 11 gegen die Lenkstange 3 an, wie dies beispielsweise in DE 10 2012 019 934 A1 beschrieben ist. Der diesbezügliche Inhalt aus DE 10 2012 019 934 A1 wird in die vorliegende Offenbarung ausdrücklich miteinbezogen.

Das Druckstück 11 ist in einer Buchse 15, welche am Lenkungsgehäuse 2 ausgebildet oder befestigt ist, in einer Axialrichtung A gleitbewegbar angeordnet. Zwischen der Innenwand der Buchse 15 und dem Außenumfang des Druckstücks 11 kann ein Dichtring 16 vorgesehen sein.

Das Einstellelement 12 ist im eingebauten Zustand in die Buchse 15 eingeschraubt und weist vorliegend hierzu ein Außengewinde 17 auf. Es dient dazu, den axialen Verschiebeweg des Druckstücks 11 in einer Richtung zu begrenzen. Zudem kann mittels des Einstellelements 12 die Vorspannkraft, mit der das Druckstück 11 gegen die Lenkstange 3 gedrängt wird, bei der Montage eingestellt werden.

Diese Vorspannkraft wird durch Zusammendrücken der Federeinrichtung 13 erzeugt, welche zwischen dem Druckstück 11 und dem Einstellelement 12 angeordnet ist.

Die Federeinrichtung 13 stützt sich in Ausnehmungen 18 und 19 ab, welche in einander gegenüberliegenden Stirnwänden 21 und 22 des Druckstücks 11 und des Einstellelements 12 ausgebildet sind. Im eingebauten Zustand werden somit die Stirnwände 21 und 22 des Druckstücks 11 und des Einstellelements 12 durch die Federeinrichtung 13 auseinander gedrängt. Die Federeinrichtung 13 kann eine Schraubenfeder sein. Sie kann jedoch beispielsweise auch als Tellerfeder oder Tellerfederpaket ausgebildet sein.

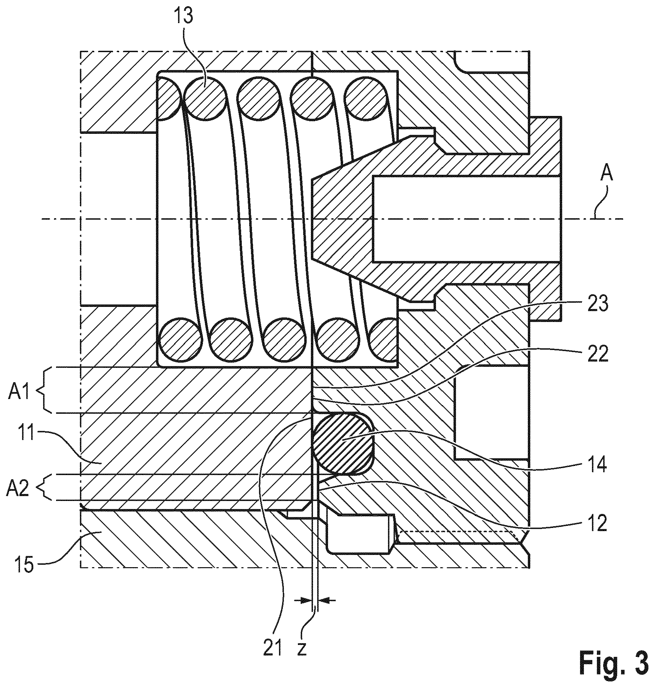

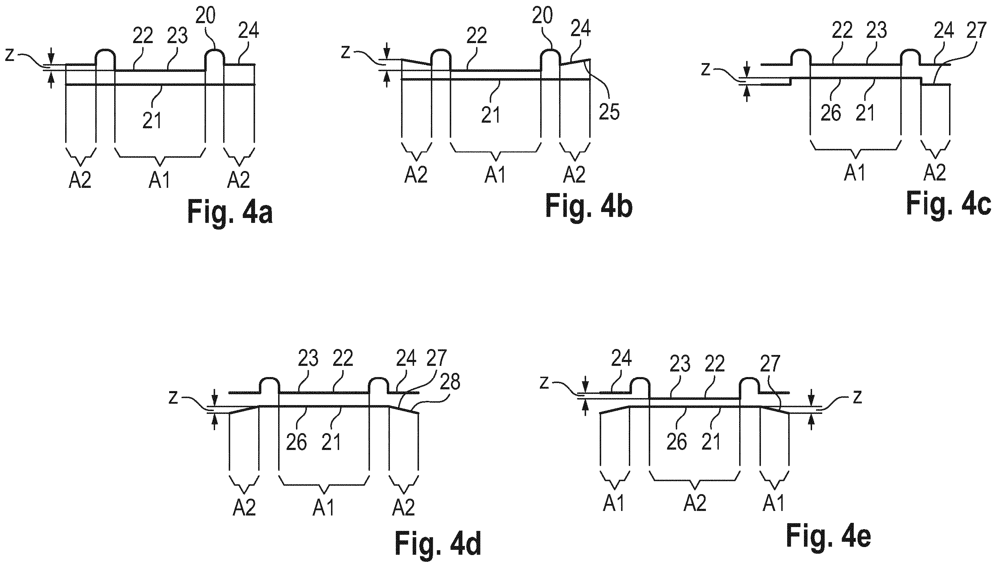

Wie insbesondere in den Fig. 3 und 4 näher dargestellt, sind die zueinander weisenden Stirnwände 21 und 22 des Druckstücks 11 und des Einstellelements 12 in besonderer Weise aufeinander abgestimmt.

So definieren die Stirnwände 21 und 22 des Druckstücks 11 und des Einstellelements 12 einen radial innenliegenden ersten gemeinsamen Anschlagsbereich A1 und einen radial außenliegenden zweiten gemeinsamen Anschlagsbereich A2, der den ersten gemeinsamen Anschlagsbereich A1 umgibt.

Dabei ist der zweite gemeinsame Anschlagsbereich A2 gegenüber dem ersten gemeinsamen Anschlagsbereich A1 derart abgesetzt, dass bei einem Anschlagen der Stirnwände 21 und 22 gegeneinander ein Anschlagen am ersten gemeinsamen Anschlagsbereich A1, d.h. am radial weiter innenliegenden Anschlagsbereich A1, vor einem Anschlagen am zweiten gemeinsamen Anschlagsbereich A2 wirksam wird. Hierdurch wird vermieden, dass bei einem Verkippen des Druckstücks 11 in seiner Führung durch die Buchse 15 die dann am weitesten axial in Richtung des Einstellelements 12 vorragenden Abschnitte der Stirnwand 21 des Druckstücks 11 ungedämpft gegen die Stirnwand 22 des Einstellelements 12 anschlagen und ein entsprechendes Geräusch erzeugen können.

Bewegt sich die Stirnwand 21 des Druckstücks 11 hingegen im Wesentlichen in Parallelausrichtung gegen die Stirnwand 22 des Einstellelements 12, kann ein harter Anschlag durch das Elastomerelement 14 vermieden werden.

Für ein solches Elastomerelement 14 kann in der Stirnwand 22 des Einstellelements 12, gegebenenfalls auch in der Stirnwand 21 des Druckstücks 11, eine Ringnut 20 ausgebildet sein.

Das Elastomerelement 14 in Form eines O-Rings ist derart angeordnet, dass dieses die Ringnut 20 in Richtung des Druckstücks 11 überragt und in einem elastisch komprimierten Zustand vollständig in der Ringnut 20 aufnehmbar ist.

Die Ringnut 20 trennt vorliegend an der Stirnwand 22 des Einstellelements 12 den ersten gemeinsamen Anschlagsbereich A1 und den zweiten gemeinsamen Anschlagsbereich A2 voneinander.

Hierdurch wird die Stirnwand 22 des Einstellelements 12 in einen Innenring 23 und einen Außenring 24 unterteilt.

Bei der in Fig. 3 beispielhaft dargestellten Ausführungsvariante ist der Außenring 24 der Stirnwand 22 des Einstellelements 12 gegenüber dem Innenring 23 der Stirnwand 22 des Einstellelements 12 zurückgesetzt. In Fig. 3 ist dies durch die axiale Zurücksetzung z angedeutet, welche vorzugsweise maximal 0,1 bis 0,3 mm beträgt.

Der Innenring 23 und der Außenring 24 sind bei dieser Ausführungsvariante als ebene und zueinander parallele Ringflächen ausgebildet.

Die Stirnwand 21 des Druckstücks 11 ist in Fig. 3 eine über die beiden gemeinsamen Anschlagsbereiche A1 und A2 ebene Fläche.

Bei einer parallelen Annäherung der beiden Stirnwände 21 und 22 gelangen diese bei kleinen Anschlagkräften lediglich im Bereich des ersten gemeinsamen Anschlagsbereichs A1 miteinander in Anlage, nachdem die dämpfende Wirkung des Elastomerelements 14 überwunden worden ist. Durch das Elastomerelement 14 wird in diesem Fall eine merkliche Geräuschbildung unterbunden.

Bei höheren axialen Lasten kommen es zu einer gewissen elastischen Verformung, so dass die Stirnwände 21 und 22 auch im zweiten gemeinsamen Anschlagsbereich A2 in Anlage gegeneinander gelangen und eine Überlastung des Einstellelements 12 vermieden wird.

Treten am Druckstück 11 verstärkte Kippmomente auf, ist die Wirkung des Elastomerelements 14 mitunter nicht mehr ausreichend gegeben. Der im Bereich des zweiten gemeinsamen Anschlagsbereichs A2 gebildete Freiraum durch die Zurücksetzung z vermeidet jedoch gleichwohl einen akustisch relevanten Kontakt. Vielmehr erfolgt auch in einem solchen Fall ein Erstkontakt im Bereich des ersten gemeinsamen Anschlagsbereichs A1. Dies kann zudem eine der Kippbewegung entgegengerichtete Parallelisierung der Stirnseiten 21 und 22 bewirken.

Selbstredend ist das Ausmaß der Zurücksetzung z auf ein maximales Verkippen des Druckstücks 11 abgestimmt. Der oben angegebene Bereich ist bei einer Kraftfahrzeuglenkung für Personenkraftfahrzeuge in der Regel ausreichend.

Der vorstehend anhand von Fig. 3 beschriebene Freiraum kann auch auf andere Art und Weise gewonnen werden, wie nachfolgend anhand von Fig. 4 erläutert werden soll. Zur Veranschaulichung der Darstellung ist sind in Fig. 4 lediglich die Stirnseiten 21 und 22 ohne Berücksichtigung der Ausnehmungen 18 und 19 dargestellt.

Fig. 4a repräsentiert hierbei die anhand von Fig. 3 erläuterte Variante.

Fig. 4b zeigt als Abwandlung hiervon die Möglichkeit, im Unterschied zu Fig. 4a den Außenring 24 der Stirnwand 21 des Einstellelements 12 als eine konische Ringfläche 25 auszubilden, wodurch das Einstellelement 12 etwas weniger stark geschwächt wird.

Ferner kann, gemäß den Varianten der Fig. 4c und 4d ein dem Außenring 24 gegenüberliegender zweiter Abschnitt 27 der Stirnwand 21 des Druckstücks 11 gegenüber einem dem Innenring 23 gegenüberliegenden ersten Abschnitt 26 der Stirnwand 21 des Druckstücks 11 zurückgesetzt sein.

In Fig. 4c sind der erste und zweite Abschnitt 26 und 27 durch zueinander parallele ebene Ringflächen gebildet. Zwischen beiden Abschnitten 26 und 27 ergibt sich dann eine kleine Stufe.

Es ist jedoch auch ein stufenloser Anschluss möglich, wie dies in Fig. 4d gezeigt ist. Hier bildet der zweite Abschnitt 27 eine konische Ringfläche 28, die an den ersten Abschnitt 26 vorzugsweise stufenlos anschließt und nach radial außen abfällt.

Fig. 4e zeigt beispielhaft eine Möglichkeit, den Freiraum durch Maßnahmen sowohl am Druckstück 11 als auch am Einstellelement 12 zu gewinnen, wobei an dieser Stelle ausdrücklich darauf hingewiesen sei, dass jede Kombination der Maßnahmen der Fig. 4a bis 4d möglich ist. Die maximale axiale Zurücksetzung z liegt jeweils im Bereich von vorzugsweise 0,1 bis 0,3 mm.

Die Erfindung wurde vorstehend anhand von Ausführungsbeispielen und weiteren Abwandlungen näher erläutert. Die Ausführungsbeispiele und Abwandlungen dienen dazu, die Ausführbarkeit der Erfindung zu belegen. Technische Einzelmerkmale, welche oben im Kontext weiterer Einzelmerkmale erläutert wurden, können auch unabhängig von diesen sowie in Kombination mit weiteren Einzelmerkmalen verwirklicht werden, selbst wenn dies nicht ausdrücklich beschrieben ist, solange dies technisch möglich ist. Die Erfindung ist daher ausdrücklich nicht auf das konkret beschriebene Ausführungsbeispiel beschränkt, sondern umfasst alle durch die Patentansprüche definierten Ausgestaltungen.

### Bezugszeichenliste

- 1: Kraftfahrzeuglenkung
- 2: Lenkungsgehäuse
- 3: Lenkstange
- 4: Getriebeglied (Lenkungsritzel)
- 5: Lenkungshandhabe
- 6: Fahrzeugrad
- 7: Elektromotor
- 8: Getriebestufe
- 9: Kugelgewindetrieb
- 10: Druckstückanordnung
- 11: Druckstück
- 12: Einstellelement
- 13: Federeinrichtung
- 14: Elastomerelement
- 15: Buchse
- 16: Dichtring
- 17: Außengewinde
- 18: Ausnehmung
- 19: Ausnehmung
- 20: Ringnut
- 21: Stirnwand am Druckstück
- 22: Stirnwand am Einstellelement
- 23: Innenring
- 24: Außenring
- 25: konische Ringfläche
- 26: erster Abschnitt
- 27: zweiter Abschnitt
- 28: konische Ringfläche
- A: Axialrichtung
- A1: erster gemeinsamer Anschlagsbereich
- A2: zweiter gemeinsamer Anschlagsbereich
- z: Zurücksetzung

## Patentansprüche

1. Druckstückanordnung (10) für eine Kraftfahrzeuglenkung (1), umfassend:
ein Druckstück (11) zur Anlage gegen eine Lenkstange (3), das in einer Buchse (15) in einer Axialrichtung (A) gleitbewegbar anordenbar ist,
ein Einstellelement (12), das in die Buchse (15) einschraubbar ist und den axialen Verschiebeweg des Druckstücks (11) in einer Richtung begrenzt,
wobei das Druckstück (11) eine zum Einstellelement (12) weisende erste Stirnwand (21) und das Einstellelement (12) eine zum Druckstück (11) weisende zweite Stirnwand (22) aufweist, und
eine Federeinrichtung (13), die zwischen dem Druckstück (11) und dem Einstellelement (12) deren Stirnwände (21, 22) auseinanderdrückend angeordnet ist,
wobei die Stirnwände (21, 22) des Druckstücks (11) und des Einstellelements (12) einen radial innenliegenden ersten gemeinsamen Anschlagsbereich (A1) und einen radial außenliegenden zweiten gemeinsamen Anschlagsbereich (A2), der den ersten gemeinsamen Anschlagsbereich (A1) umgibt, aufweisen, wobei der zweite gemeinsame Anschlagsbereich (A2) gegenüber dem ersten gemeinsamen Anschlagsbereich (A1) derart abgesetzt ist, dass bei einem Anschlagen der Stirnwände (21, 22) gegeneinander ein Anschlagen am ersten gemeinsamen Anschlagsbereich (A1) vor einem Anschlagen am zweiten gemeinsamen Anschlagsbereich (A2) wirksam wird,
**dadurch gekennzeichnet, dass**
in der Stirnwand (22) des Einstellelements (12) eine Ringnut (20) ausgebildet ist, welche an der Stirnwand (22) des Einstellelements (12) den ersten gemeinsamen Anschlagsbereich (A1) und den zweiten gemeinsamen Anschlagsbereich (A2) voneinander trennt und in einen Innenring (23) und einen Außenring (24) unterteilt, und
dass in der Ringnut (20) ein Elastomerelement (14) in Form eines O-Rings angeordnet ist, das die Ringnut (20) in Richtung des Druckstücks (11) überragt und in einem elastisch komprimierten Zustand vollständig in der Ringnut (20) aufnehmbar ist, und
der Außenring (24) eine konische Ringfläche (25) ist und/oder ein dem Außenring (24) gegenüberliegender zweiter Abschnitt (27) der Stirnwand (21) des Druckstücks (11) eine konische Ringfläche (28) ist.

2. Druckstückanordnung (10) nach Anspruch 1, **dadurch gekennzeichnet, dass** der Außenring (24) gegenüber dem Innenring (23) zurückgesetzt ist.

3. Druckstückanordnung (10) nach Anspruch 1 oder 2, **dadurch gekennzeichnet, dass** der Außenring (24) und der Innenring (23) ebene und zueinander parallele Ringflächen sind.

4. Druckstückanordnung (10) nach einem der Ansprüche 1 bis 3, **dadurch gekennzeichnet, dass** die Stirnwand (21) des Druckstücks (11) über die beiden gemeinsamen Anschlagsbereiche (A1, A2) eine ebene Fläche ist.

5. Druckstückanordnung (10) nach einem der Ansprüche 1 bis 3, **dadurch gekennzeichnet, dass** der dem Außenring (24) gegenüberliegende zweite Abschnitt (27) der Stirnwand (21) des Druckstücks (11) gegenüber einem dem Innenring (23) gegenüberliegenden ersten Abschnitt (26) der Stirnwand (21) des Druckstücks (11) zurückgesetzt ist.

6. Druckstückanordnung nach Anspruch 5, **dadurch gekennzeichnet, dass** der erste und zweite Abschnitt (26, 27) durch zueinander parallele ebene Ringflächen gebildet werden.

7. Druckstückanordnung nach einem der Ansprüche 1 bis 7, **dadurch gekennzeichnet, dass** die axiale Zurücksetzung maximal 0,1 bis 0,3 mm beträgt.

8. Kraftfahrzeuglenkung (1) mit einem Lenkungsgehäuse (2), einer Lenkstange (3) und einer Druckstückanordnung (10) nach einem der vorgenannten Ansprüche, wobei die Buchse (15) am Lenkungsgehäuse (2) angebracht oder ausgebildet ist, das Druckstück (11) unter Anlage gegen die Lenkstange (3) in die Buchse (15) eingesetzt ist, das Einstellelement (12) am Lenkungsgehäuse (2) festgelegt ist und die Federeinrichtung (13), welche sich gegen das Einstellelement (12) abstützt, das Druckstück (11) in Anlage gegen die Lenkstange (3) drängt.

## Claims

1. Pressure piece arrangement (10) for a motor vehicle steering system (1), comprising:
∘ a pressure piece (11) for bearing against a steering rod (3), which can be arranged to slide in an axial direction (A) in a bushing (15),
∘ an adjustment element (12) that can be screwed into the bushing (15) and limits the axial displacement path of the pressure piece (11) in one direction,
∘ wherein the pressure piece (11) has a first end wall (21) facing the adjustment element (12) and the adjustment element (12) has a second end wall (22) facing the pressure piece (11),
∘ and a spring device (13) arranged between the pressure piece (11) and the adjustment element (12) to push their end walls (21, 22) apart,
∘ wherein the end walls (21, 22) of the pressure piece (11) and the adjustment element (12) have a radially inner first common stop area (A1) and a radially outer second common stop area (A2) surrounding the first common stop area (A1), wherein the second common stop area (A2) is offset relative to the first common stop area (A1) such that when the end walls (21, 22) strike against each other, a strike against the first common stop area (A1) becomes effective before a strike against the second common stop area (A2),
∘ **characterized in that**
∘ a ring groove (20) is formed in the end wall (22) of the adjustment element (12), which separates the first common stop area (A1) and the second common stop area (A2) from each other and divides them into an inner ring (23) and an outer ring (24),
∘ and that an elastomer element (14) in the form of an O-ring is arranged in the ring groove (20), which protrudes from the ring groove (20) in the direction of the pressure piece (11) and can be completely accommodated in the ring groove (20) in an elastically compressed state,
∘ and the outer ring (24) is a conical ring surface (25) and/or a second section (27) of the end wall (21) of the pressure piece (11) opposite the outer ring (24) is a conical ring surface (28).

2. Pressure piece arrangement (10) according to claim 1, **characterized in that** the outer ring (24) is recessed relative to the inner ring (23).

3. Pressure piece arrangement (10) according to claim 1 or 2, **characterized in that** the outer ring (24) and the inner ring (23) are flat and parallel ring surfaces.

4. Pressure piece arrangement (10) according to one of claims 1 to 3, **characterized in that** the end wall (21) of the pressure piece (11) is a flat surface over the two common stop areas (A1, A2).

5. Pressure piece arrangement (10) according to one of claims 1 to 3, **characterized in that** the second section (27) of the end wall (21) of the pressure piece (11) opposite the outer ring (24) is recessed relative to a first section (26) of the end wall (21) of the pressure piece (11) opposite the inner ring (23).

6. Pressure piece arrangement according to claim 5, **characterized in that** the first and second sections (26, 27) are formed by flat and parallel ring surfaces.

7. Pressure piece arrangement according to one of claims 1 to 7, **characterized in that** the axial recess is a maximum of 0.1 to 0.3 mm.

8. Motor vehicle steering system (1) with a steering housing (2), a steering rod (3), and a pressure piece arrangement (10) according to one of the preceding claims, wherein the bushing (15) is attached or formed on the steering housing (2), the pressure piece (11) is inserted into the bushing (15) bearing against the steering rod (3), the adjustment element (12) is fixed to the steering housing (2), and the spring device (13), which is supported against the adjustment element (12), pushes the pressure piece (11) against the steering rod (3).

## Revendications

1. Ensemble de pièce de pression (10) pour un système de direction de véhicule automobile (1), comprenant :
∘ une pièce de pression (11) pour s'appuyer contre une tige de direction (3), qui peut être disposée pour coulisser dans une direction axiale (A) dans un manchon (15),
∘ un élément de réglage (12) qui peut être vissé dans le manchon (15) et limite le chemin de déplacement axial de la pièce de pression (11) dans une direction,
∘ la pièce de pression (11) ayant une première paroi d'extrémité (21) faisant face à l'élément de réglage (12) et l'élément de réglage (12) ayant une deuxième paroi d'extrémité (22) faisant face à la pièce de pression (11),
∘ et un dispositif à ressort (13) disposé entre la pièce de pression (11) et l'élément de réglage (12) pour écarter leurs parois d'extrémité (21, 22),
∘ les parois d'extrémité (21, 22) de la pièce de pression (11) et de l'élément de réglage (12) ayant une première zone d'arrêt commune radiale intérieure (A1) et une deuxième zone d'arrêt commune radiale extérieure (A2) entourant la première zone d'arrêt commune (A1), la deuxième zone d'arrêt commune (A2) étant décalée par rapport à la première zone d'arrêt commune (A1) de telle sorte que lorsque les parois d'extrémité (21, 22) se heurtent, un heurt contre la première zone d'arrêt commune (A1) devient effectif avant un heurt contre la deuxième zone d'arrêt commune (A2),
∘ **caractérisé en ce que**
∘ une rainure annulaire (20) est formée dans la paroi d'extrémité (22) de l'élément de réglage (12), qui sépare la première zone d'arrêt commune (A1) et la deuxième zone d'arrêt commune (A2) l'une de l'autre et les divise en un anneau intérieur (23) et un anneau extérieur (24),
∘ et qu'un élément en élastomère (14) sous forme de joint torique est disposé dans la rainure annulaire (20), qui dépasse de la rainure annulaire (20) en direction de la pièce de pression (11) et peut être complètement logé dans la rainure annulaire (20) dans un état élastiquement comprimé,
∘ et l'anneau extérieur (24) est une surface annulaire conique (25) et/ou une deuxième section (27) de la paroi d'extrémité (21) de la pièce de pression (11) opposée à l'anneau extérieur (24) est une surface annulaire conique (28).

2. Ensemble de pièce de pression (10) selon la revendication 1, **caractérisé en ce que** l'anneau extérieur (24) est en retrait par rapport à l'anneau intérieur (23).

3. Ensemble de pièce de pression (10) selon la revendication 1 ou 2, **caractérisé en ce que** l'anneau extérieur (24) et l'anneau intérieur (23) sont des surfaces annulaires planes et parallèles.

4. Ensemble de pièce de pression (10) selon l'une des revendications 1 à 3, **caractérisé en ce que** la paroi d'extrémité (21) de la pièce de pression (11) est une surface plane sur les deux zones d'arrêt communes (A1, A2).

5. Ensemble de pièce de pression (10) selon l'une des revendications 1 à 3, **caractérisé en ce que** la deuxième section (27) de la paroi d'extrémité (21) de la pièce de pression (11) opposée à l'anneau extérieur (24) est en retrait par rapport à une première section (26) de la paroi d'extrémité (21) de la pièce de pression (11) opposée à l'anneau intérieur (23).

6. Ensemble de pièce de pression selon la revendication 5, **caractérisé en ce que** les première et deuxième sections (26, 27) sont formées par des surfaces annulaires planes et parallèles.

7. Ensemble de pièce de pression selon l'une des revendications 1 à 7, **caractérisé en ce que** le retrait axial est au maximum de 0,1 à 0,3 mm.

8. Système de direction de véhicule automobile (1) avec un boîtier de direction (2), une tige de direction (3) et un ensemble de pièce de pression (10) selon l'une des revendications précédentes, le manchon (15) étant fixé ou formé sur le boîtier de direction (2), la pièce de pression (11) étant insérée dans le manchon (15) en appui contre la tige de direction (3), l'élément de réglage (12) étant fixé au boîtier de direction (2), et le dispositif à ressort (13), qui est soutenu contre l'élément de réglage (12), poussant la pièce de pression (11) contre la tige de direction (3).
